# EUROPÄISCHE PATENTSCHRIFT

(11) **EP 2 340 949 B1**
(45) Veröffentlichungstag und Bekanntmachung des Hinweises auf die Patenterteilung: **25.03.2015**
(21) Anmeldenummer: 10186628.3
(22) Anmeldetag: 06.10.2010
(51) Int. Cl.: B60C 11/13

(54) **Fahrzeugreifen**
Vehicle tyre
Pneu

(30) Priorität: 14.12.2009 DE 102009044886
(43) Veröffentlichungstag der Anmeldung: 06.07.2011
(73) Patentinhaber: Continental Reifen Deutschland GmbH, 30165 Hannover (DE)
(72) Erfinder: Behr, Ulrich, 30169, Hannover (DE); Fischer, Markus, 30823, Garbsen (DE)
(74) Vertreter: Finger, Karsten

(56) Entgegenhaltungen:
- EP-A2- 1 661 732
- NL-A- 7 614 442
- US-A1- 2003 047 262

## Beschreibung

### Fahrzeugreifen

Die Erfindung betrifft einen Fahrzeugreifen mit einem - insbesondere asymmetrischen - Laufstreifenprofil mit einer an der zum Fahrzeug hinweisenden Reifeninnenschulter (IN) ausgebildeten Profilblockreihe aus in Umfangsrichtung U des Fahrzeugreifens hintereinander angeordneten und durch Querrillen von einander beabstandeten Profilblockelementen und mit einer über den Umfang des Fahrzeugreifens erstreckten Profilrippe, welche von der Profilblockreihe in axialer Richtung A des Fahrzeugreifens durch eine über den Umfang des Fahrzeugreifens erstreckte, zickzack-förmig verlaufende Umfangsrille mit in Umfangsrichtung alternierend angeordneten ersten zur Profilblockreihe axial hinweisenden und zweiten von der Profilblockreihe axial wegweisenden Knickstellen getrennt ist, wobei in jede erste Knickstelle jeweils eine der Querrillen mündet, wobei die Umfangsrille nach radial innen von einem Rillengrund, zur Profilblockreihe hin von einer ersten Rillenwand und zur Profilrippe von einer zweiten Rillenwand begrenzt ist.

Fahrzeugluftreifen mit derartigen Laufstreifenprofilen sind bekannt. Die Zick-Zack-Form bewirkt eine rautenähnliche Gestaltung der Profilblockreihe und der Umfangsrippe, welche gerade in der für die zur Übertragung der Bremskräfte wichtigen Reifeninnenschulter die Übertragung der Bremskräfte zusätzlich begünstigt. Andererseits beeinträchtigt die Zick-Zack-Form die Aquaplaning-Eigenschaften negativ. Für einen guten Abfluss des Wassers sind möglichst geradlinige, in Umfangsrichtung gerichtete Rillen wünschenswert. Üblicher Weise wird bei derartigen Fahrzeugluftreifen dann entweder zur Erzielung besonders guter Aquaplaning-Eigenschaften die Zick-Zack-Form nur sehr schwach ausgeprägt oder es wird ganz auf die Zick-Zack-Form verzichtet oder es werden zu Gunsten guter

Bremseigenschaften eingeschränkte Aquaplaning-Eigenschaften in Kauf genommen.

Aus der NL 7 614 442 ist ein Rippenprofil eines Reifens bekannt, welches aus fünf in axialer Richtung des Reifens nebeneinander angerordneten Umfangsrippen besteht. Die trennenden Umfangsrillen sind mit geneigten Rillenwänden und mit einem zick-zackförmigen Rillengrund ausgebildet.

Der Erfindung liegt die Aufgabe zugrunde bei einem derartigen Fahrzeugreifen mit einem - insbesondere asymmetrischen - Laufstreifenprofil mit einer an der zum Fahrzeug hinweisenden Reifeninnenschulter (IN) ausgebildeten Profilblockreihe aus in Umfangsrichtung U des Fahrzeugreifens hintereinander angeordneten und durch Querrillen von einander beabstandeten Profilblockelementen und mit einer über den Umfang des Fahrzeugreifens erstreckten Profilrippe, welche von der Profilblockreihe in axialer Richtung A des Fahrzeugreifens durch eine über den Umfang des Fahrzeugreifens erstreckte, zickzack-förmig verlaufende Umfangsrille mit in Umfangsrichtung alternierend angeordneten ersten zur Profilblockreihe axial hinweisenden und zweiten von der Profilblockreihe axial wegweisenden Knickstellen getrennt ist, wobei in jede erste Knickstelle jeweils eine der Querrillen mündet, wobei die Umfangsrille nach radial innen von einem Rillengrund, zur Profilblockreihe hin von einer ersten Rillenwand und zur Profilrippe von einer zweiten Rillenwand begrenzt ist, unter Nutzung der Vorteile der zickzackförmigen Umfangsrille, der Profilblockreihe und der Umfangsrippe bei hohen übertragbaren Bremskräften gute Aquaplaningeigenschaften, Handling- und Trockenbremseigenschaften zu ermöglichen.

Die Aufgabe wird erfindungsgemäß gelöst, durch die Ausbildung eines Fahrzeugreifens mit einem - insbesondere asymmetrischen - Laufstreifenprofil mit einer an der zum Fahrzeug hinweisenden Reifeninnenschulter (IN) ausgebildeten Profilblockreihe aus in Umfangsrichtung U des Fahrzeugreifens hintereinander angeordneten und durch Querrillen von einander beabstandeten Profilblockelementen und mit einer über den Umfang des Fahrzeugreifens erstreckten Profilrippe, welche von der Profilblockreihe in axialer Richtung A des Fahrzeugreifens durch eine über den Umfang des Fahrzeugreifens erstreckte, zickzack-förmig verlaufende Umfangsrille mit in Umfangsrichtung alternierend angeordneten ersten zur Profilblockreihe axial hinweisenden und zweiten von der Profilblockreihe axial wegweisenden Knickstellen getrennt ist, wobei in jede erste Knickstelle jeweils eine der Querrillen mündet, wobei die Umfangsrille nach radial innen von einem Rillengrund, zur Profilblockreihe hin von einer ersten Rillenwand und zur Profilrippe von einer zweiten Rillenwand begrenzt ist, gemäß den Merkmalen von Anspruch 1, bei dem die erste Rillenwand aus einem radial inneren Erstreckungsabschnitt, der sich in radialer Richtung R vom Rillengrund nach außen bis in eine radiale Position in einer Höhe h vom tiefsten Punkt des Rillengrundes erstreckt, und aus einem radial äußeren Erstreckungsabschnitt, der sich von der Höhe h ausgehend nach radial außen bis zu der die Profilblockreihe nach radial außen begrenzenden, die Straßenkontaktfläche bildenden Oberfläche erstreckt, ausgebildet ist, wobei im radial inneren Erstreckungsabschnitt die Rillenwand längs der Erstreckung von Knickstelle zu Knickstelle der Umfangsrille unter Einschluss eines konstanten Neigungswinkels γ zur Radialen R geneigt ist und die Höhe h längs der Erstreckung zwischen zwei hintereinander angeordneten Knickstellen jeweils von erster zu zweiter Knickstelle hin kontinuierlich abnimmt, und wobei im radial äußeren Erstreckungsabschnitt die Rillenwand längs der Erstreckung von Knickstelle zu Knickstelle der Umfangsrille unter Einschluss eines konstanten Neigungswinkels α zur Radialen R geneigt ist mit α > γ, und bei dem die zweite Rillenwand sich in radialer Richtung R vom Rillengrund nach außen bis zu der die Profilrippe nach radial außen begrenzenden, die Straßenkontaktfläche bildenden Oberfläche erstreckt und längs der Erstreckung von Knickstelle zu Knickstelle der Umfangsrille unter Einschluss eines Neigungswinkels β zur Radialen R geneigt ausgebildet ist, wobei der Neigungswinkels β längs der Erstreckung zwischen zwei hintereinander angeordneten Knickstellen jeweils von erster zu zweiter Knickstelle hin kontinuierlich abnimmt.

Durch diese Ausbildung wird ermöglicht, dass in dem radial äußeren mit der Straßenkontaktoberfläche wirksamen Erstreckungsbereich der zick-zackförmigen Rille eine deutlich reduzierte Intensität bzw. Ausprägung der Zick-Zackform mit einem stärker der Umfangsrichtung angeschmiegtem Verlauf erreicht wird unter Beibehaltung eines im radial inneren Erstreckungsbereich der Rille sehr stark ausgeprägten zick-zackförmigen Verlaufes. Hierdurch wird in dem mit der Straße und dem mit einem Nässefilm auf der Straßenoberfläche in Kontakt tretenden äußeren Profilbereich ein einer geradlinigen Umfangsrille angenähertes Wasserableitverhalten und somit verbesserte Aquaplaningeigenschaften ermöglicht bei Beibehaltung der stark ausgeprägten Zick-Zackform im radial inneren Erstreckungsbereich der Rille und der für die Bremskraftübertragung ausgeprägten Rautenform. Die Veränderung der Oberflächenstruktur der zick-zack-förmigen Rille sowie der für die Bremskraftübertragung wichtigen Rautenform erfolgt gleichmäßig über die Lebensdauer des Reifens. Dabei werden die durch die zick-zack-förmig ausgebildete Umfangsrille in den Profilblockelementen der Profilblockreihe ausgebildeten Profilblockelementspitzen durch die in diesem Bereich minimale Erstreckungshöhe h des radial inneren Erstreckungsbereiches und den hierdurch bedingten maximalen Erstreckungsbereich des radial äußeren Erstreckungsabschnitts mit einem Flankenwinkel α, welcher größer ist als y, wirkungsvoll versteift, wodurch Handling- und Trockenbremseigenschaften des Reifens positiv beeinflusst werden können. Die symmetrische Gestaltung der Rillenkonstruktion sichert darüber hinaus eine drehrichtungsunabhängige zuverlässige Entwässerung.

Besonders vorteilhaft ist die Ausbildung gemäß den Merkmalen von Anspruch 2, wobei der Neigungswinkels β mit 0° ≤ β ≤ 35° ausgebildet ist. Hierdurch kann in einfacher Weise zuverlässig eine ausreichende Bodenkontaktfläche bei gutem Durchflusses und hoher Abstützungseffekte sichergestellt werden.

Besonders vorteilhaft ist die strömungsoptimierte Ausbildung gemäß den Merkmalen von Anspruch 3, wobei der Neigungswinkels β längs der Erstreckung zwischen zwei hintereinander angeordneten Knickstellen jeweils von erster zu zweiter Knickstelle hin von einem maximalen Wert βₘₐₓ =35° bis zu einem minimalen Wert βₘᵢₙ=0° kontinuierlich abnimmt.

Besonders vorteilhaft ist die Ausbildung gemäß den Merkmalen von Anspruch 4, wobei der Neigungswinkels α mit 35° ≤ α ≤ 60° ausgebildet ist. Hierdurch können einfach und zuverlässig Einrolleffekte vermieden werden bei Aufrechterhaltung hoher Kontaktfläche zur Straßenoberfläche.

Besonders vorteilhaft ist die Ausbildung gemäß den Merkmalen von Anspruch 5, wobei die Höhe h längs der Erstreckung zwischen zwei hintereinander angeordneten Knickstellen jeweils von erster zu zweiter Knickstelle hin von einem maximalen Wert hₘₐₓ = P_{T} bis zu einem minimalen Wert hₘᵢₙ= 0mm kontinuierlich abnimmt, wobei die maximale Profiltiefe in der Umfangsrille ist. Hierdurch kann ein optimierte Strömungsablauf ermöglicht werden bei Aufrechterhaltung hoher Kontaktfläche zur Straßenoberfläche und bei Sicherstellung hoher Abstützeffekte.

Besonders vorteilhaft ist die Ausbildung gemäß den Merkmalen von Anspruch 6, wobei die im Rillengrund der Umfangsrille jeweils senkrecht zum Rillenverlauf und zur radialen Richtung R gemessene Rillenbreite b längs der Erstreckung der Umfangsrille zwischen zwei hintereinander angeordneten Knickstellen jeweils von erster zu zweiter Knickstelle hin kontinuierlich abnimmt. Der Ablaufkanal öffnet sich auf diese Weise jeweils zur ableitenden Querrille hin. Beim Durchlaufen des Reifenlatsches wird durch zusätzlich aufgebauten Druck das Wasser in Richtung breiter Querrille beschleunigt. Hierdurch wird in einfacher Weise der Wasserablauf begünstigt bei großer erzielbarer Kontaktfläche zur Straßenoberfläche.

Besonders vorteilhaft ist die Ausbildung gemäß den Merkmalen von Anspruch 7, wobei die Breite b mit 1mm ≤ b ≤ 10mm ausgebildet ist. Hierdurch kann in einfacher Weise ein guter Wasserablauf sichergestellt werden bei günstiger Materialverteilung des Kautschukmaterials im Herstellprozess.

Die Erfindung wird im Folgenden an Hand der in den Figuren 1 bis 6 dargestellten Ausführungsbeispiele näher erläutert. Dabei zeigen
Fig. 1 Draufsicht auf einen Umfangsabschnitt des zur Fahrzeuginnenseite IN gerichteten axialen Erstreckungsabschnitt eines zur Äquatorlinie des Reifens asymmetrisch ausgebildeten Laufstreifenprofils,
Fig. 2 Laufstreifenprofil von Fig. 1 in Schnittdarstellung gemäß Schnitt II-II von Fig.1,
Fig. 3 Laufstreifenprofil von Fig. 1 in Schnittdarstellung gemäß Schnitt III-III von Fig.1,
Fig. 4 Laufstreifenprofil von Fig. 1 in Schnittdarstellung gemäß Schnitt IV-IV von Fig.1,
Fig. 5 Laufstreifenprofil von Fig. 1 in Schnittdarstellung gemäß Schnitt V-V von Fig. 1 und
Fig. 6 Laufstreifenprofil von Fig.1 in Schnittdarstellung gemäß Schnitt VI-VI von Fig.1.

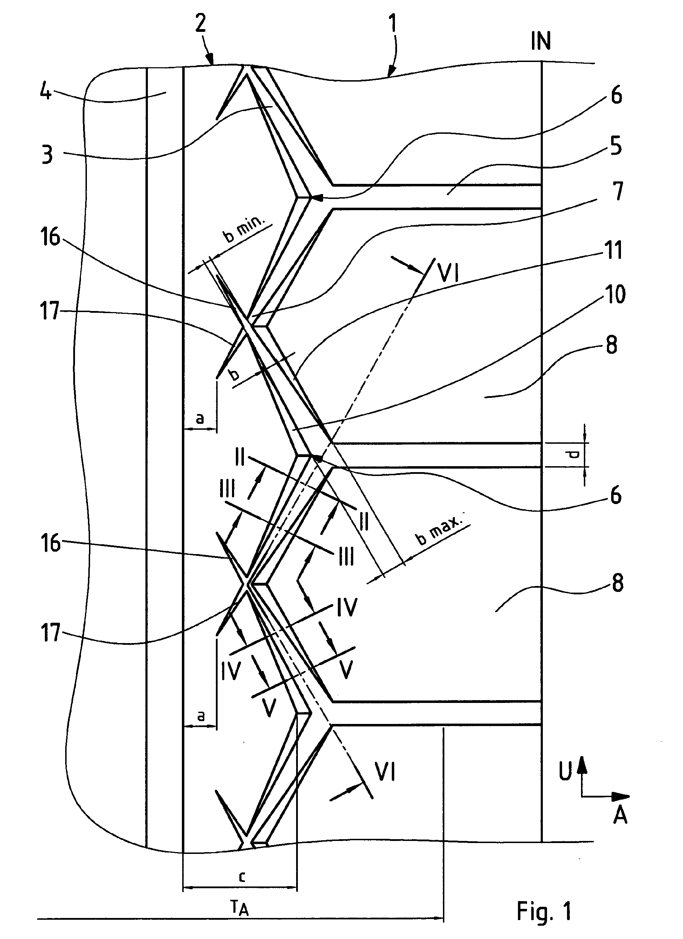

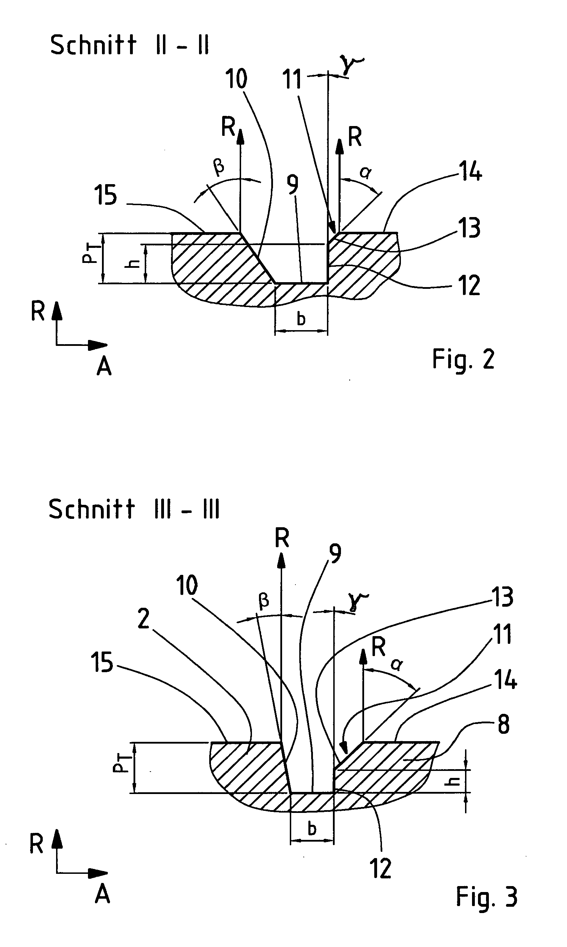

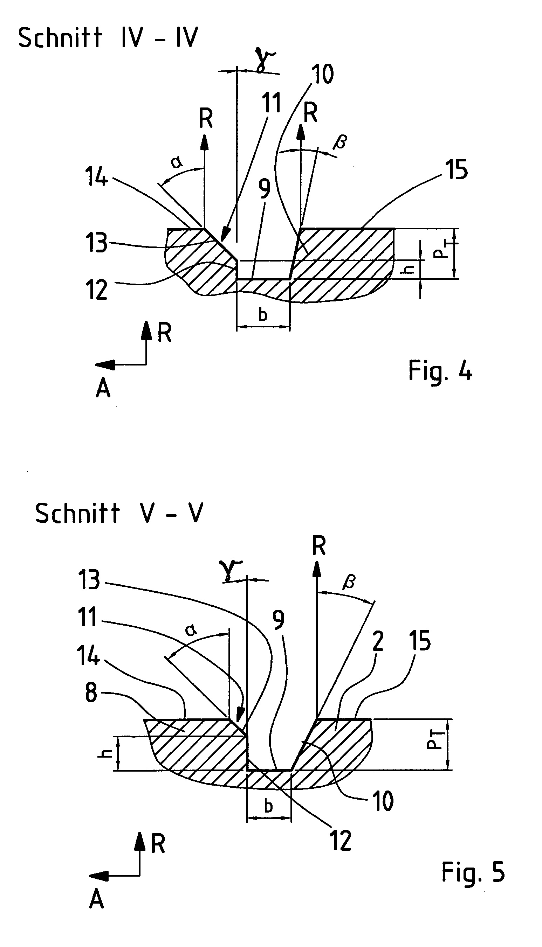

Die Figuren 1 bis 6 zeigen die im montierten Zustand eines Fahrzeugluftreifens zur Fahrzeuginnenseite IN gerichtete Reifenschulter eines Laufstreifenprofils mit einer im Schulterbereich ausgebildeten und in Umfangsrichtung U des Fahrzeugluftreifens über den gesamten Umfang erstreckten Profilblockreihe 1 und mit einer in Richtung der nicht dargestellten Außenseite OU des Fahrzeugluftreifens in axialer Richtung A neben der Profilblockreihe 1 angeordneten und über den gesamten Umfang des Fahrzeugluftreifen erstreckten Umfangsrippe 2. Die Umfangsrippe 2 und die Profilblockreihe 1 sind durch eine über den gesamten Umfang des Fahrzeugluftreifens erstreckte, in ihrem Verlauf zickzackförmig ausgebildete Umfangsrille 3 in axialer Richtung A voneinander beabstandet. Die Umfangsrippe 2 ist zu ihrer von der Innenseite IN weg weisenden, axialen Seite hin durch eine über den gesamten Umfang des Fahrzeugluftreifens in Umfangsrichtung U geradlinig erstreckte Umfangsrille 4 begrenzt. Die Profilblockreihe 1 ist aus in Umfangsrichtung U des Fahrzeugluftreifens hintereinander und über den Umfang verteilt angeordneten Profilblockelementen 8 ausgebildet, welche in Umfangsrichtung jeweils durch Querrillen 5 voneinander beabstandeten sind.

Die Umfangsrille 3 ist mit ihrem Zick-Zack-Verlauf mit in Umfangsrichtung U in alternierender Reihenfolge hintereinander angeordneten ersten Knickstellen 6 und zweiten Knickstellen 7 ausgebildet. Die ersten Knickstellen 6 bilden die die Umfangsrille 3 in ihrem Zick-Zack-Verlauf jeweils zur Reifeninnenschulter IN gerichteten Knickstellen und begrenzen die Umfangsrille 3 in ihrem axialen Verlauf zur Reifeninnenschulter hin. Die zweiten Knickstellen 7 bilden die von der Reifeninnenschulter IN weg weisenden Knickstellen und begrenzen die Umfangsrille 3 in ihrem axialen Verlauf zu der von der Reifeninnenschulter IN weg weisenden axialen Seite hin.

Wie in Fig. 1 zu erkennen ist, erstreckt sich die axiale Breite T_{A} der Bodenaufstandsfläche bis in den axialen Erstreckungsbereich der Querrillen 5 hinein.

Die Querrillen 5 sind geradlinig in axialer Richtung A verlaufend ausgebildet und erstrecken sich in axialer Richtung A von einer Position axial außerhalb der Bodenaufstandsbreite bis in den axialen Erstreckungsbereich der Bodenaufstandsbreite hinein und münden jeweils in eine erste Knickstelle 6 in die zick-zack-förmige Umfangsrille 3. Dabei mündet in jede erste Knickstelle 6 der zick-zack-förmigen Umfangsrille 3 jeweils eine Querrille 5.

Die Umfangsrille 3 ist nach radial innen hin von einem über den gesamten Umfang des Fahrzeugluftreifens erstreckt ausgebildeten, im Querschnitt senkrecht zur Erstreckungsrichtung der Umfangsrille 3 gesehen jeweils geradlinig verlaufenden Rillengrund 9 begrenzt. Die Umfangsrille 3 ist zur Profilrippe 2 hin von einer Rillenwand 10, welche die zur Umfangsrille 3 hin gerichtete Flanke der Profilrippe 2 bildet, begrenzt. Die Umfangsrille 3 ist zur Profilblockreihe 1 hin von einer Rillenwand 11, welche die zur Umfangsrille 3 hin gerichteten Flanken der Profilblockelemente 8 bildet, begrenzt.

Die Rillenwand 10 erstreckt sich in radialer Richtung R des Fahrzeugluftreifens ausgehend vom Rillengrund 9 nach außen bis zu der die Profilrippe 2 nach radial außen hin begrenzenden, die Straßenkontaktoberfläche bildenden radial äußeren Oberfläche 15.

Die Rillenwand 11 erstreckt sich in radialer Richtung R nach außen ausgehend vom Rillengrund 9 mit einem bis in eine im radialen Abstand der Höhe h vom tiefsten Punkt des Rillengrundes erstreckt ausgebildeten radial inneren Erstreckungsabschnitt 12 und mit einem von der radialen Position in der Höhe h ausgehend nach radial außen bis zu der die Profilblockelemente 8 nach radial außen begrenzenden, die Straßenkontaktoberfläche bildenden radial äußeren Oberfläche 15 mit einem radial äußeren Erstreckungsabschnitt 13.

Die Rillenwand 11 ist in ihrem radial inneren Erstreckungsbereich 12 in den Schnittebenen senkrecht zum Erstreckungsverlauf der Umfangsrille 3 gemessenen mit einer längs der radialen Erstreckung nach außen von der Umfangsrille 3 wegweisenden Neigung unter Einschluss eines Neigungswinkels γ zur radialen Richtung R des Fahrzeugluftreifens ausgebildet, wobei der Winkel γ über den gesamten Erstreckungsbereich entlang eines jeden Profilblockelements 8 jeweils konstant ist. Die Rillenwand 11 ist in ihrem radial äußeren Erstreckungsbereich 13 in den Schnittebenen senkrecht zum Erstreckungsverlauf der Umfangsrille 3 gemessenen mit einer längs der radialen Erstreckung nach außen zur Innenseite IN hinweisenden - d.h. mit einer von der Umfangsrille 3 wegweisenden - Neigung ausgebildet unter Einschluss eines Neigungswinkel α zur radialen Richtung R, wobei der Neigungswinkel α über den gesamten Erstreckungsbereich entlang eines jeden Profilblockelements 8 jeweils konstant ist. Für die Winkel α und γ gilt: α > γ.

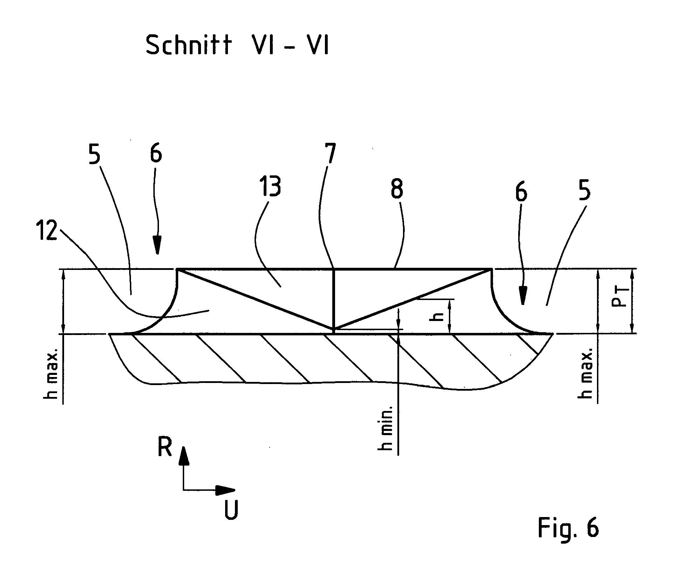

Die Erstreckungshöhe h des radial inneren Erstreckungsbereiches 12 nimmt ausgehend von ihrem maximalen Wert hₘₐₓ in der ersten Knickstelle 6 längs der Erstreckung der Umfangsrille 3 jeweils zur nächstliegenden zweiten Knickstelle 7 hin konstant ab und nimmt in der Position der zweiten Knickstelle 7 ihren Minimalwert hₘₘ ein. Ausgehend von der zweiten Knickstelle 7 nimmt die Erstreckungshöhe h längs der Erstreckung der Umfangsrille 3 - wie in Fig. 6 dargestellt ist - zur nächsten ersten Knickstelle 6 hin wieder konstant zu und erreicht ihren Maximalwert hₘₐₓ an der ersten Knickstelle 6.

Im dargestellten Ausführungsbeispiel ist hₘₘ = 0mm und hₘₐₓ = P_{T} gewählt, wobei P_{T} die Profiltiefe im Bereich der Umfangsrille 3 darstellt, die die maximale radiale Erstreckung vom tiefsten Punkt des Rillengrundes 9 bis zur der Oberfläche 14 bildet. Im dargestellten Ausführungsbeispiel ist die Profiltiefe P_{T} = 6mm gewählt.

Der Neigungswinkel α ist aus einem Winkelbereich von 35° ≤ α ≤ 60° gewählt. Im dargestellten Ausführungsbeispiel ist α = 45° gewählt. Im dargestellten Ausführungsbeispiel ist γ = 1° gewählt.

Die Rillenwand 10 ist in den Schnittebenen senkrecht zum Erstreckungsverlauf der Umfangsrille 3 gesehen mit geradlinigem Flankenverlauf mit einer längs der radialen Erstreckung nach außen von der Umfangsrille 3 weg und in Richtung zur nicht dargestellten Reifenaußenseite hinweisenden Neigung unter Einschluss eines Neigungswinkels ß zur radialen Richtung R des Fahrzeugluftreifens ausgebildet. Der Neigungswinkel ß nimmt dabei jeweils ausgehend von einer zweiten Knickstelle 7 längs der Erstreckung der Umfangsrille 3 bis hin zur jeweils nächstliegenden ersten Knickstelle 6 hin kontinuierlich zu. Von dieser ersten Knickstelle 6 nimmt der Neigungswinkel ß in den jeweiligen Schnittebenen senkrecht zur Erstreckungsrichtung der Umfangsrille 3 gesehen jeweils längs der Erstreckung der Umfangsrille 3 bis zur nächsten zweiten Knickstelle 7 hin wieder kontinuierlich ab. Im dargestellten Ausführungsbeispiel ist die Veränderung des Neigungswinkels mit einer konstanten Veränderung längs der Erstreckung der Umfangsrille 3 ausgebildet.

Der Neigungswinkel ß ist längs der Erstreckung der Umfangsrille 3 dabei aus einem Wertebereich für die Winkel mit 0° ≤ ß ≤ 35° ausgebildet.

Im dargestellten Ausführungsbeispiel verändert sich der Neigungswinkel ß jeweils ausgehend von einer ersten Knickstelle 6, in welcher er den Maximalwert des Winkelbereiches mit ßₘₐₓ = 35° einnimmt, unter konstanter Abnahme bis zur benachbarten zweiten Knickstelle 7 hin, in welche er jeweils einen Minimalwert mit ßₘₘ = 0° einnimmt.

Der Rillengrund 9 der Umfangsrille 3 ist mit einer jeweils senkrecht zur Erstreckungsrichtung der Umfangsrille 3 gemessenen Breite b ausgebildet, welche längs der Erstreckung der Umfangsrille 3 jeweils ausgehend von einer ersten Knickstelle 6 zur nächstliegenden zweiten Knickstelle 7 hin kontinuierlich abnimmt und ausgehend von dieser Knickstelle 7 bis zur nächsten ersten Knickstelle 6 hin wieder kontinuierlich zunimmt. Im Bereich der ersten Knickstelle 6 nimmt die Breite b jeweils ihren maximalen Wert bₘₐₓ und an der zweiten Knickstelle 7 jeweils ihre minimal Breite bₘᵢₙ ein.

Die Breite b ist aus einem Bereich mit 1mm ≤ b ≤ 10mm gewählt.

Im dargestellten Ausführungsbeispiel ist bₘₐₓ = 7mm und bₘᵢₙ = 2mm gewählt.

Die Querrillen 5 sind in ihrem Rillengrund mit einer Breite d ausgebildet, wobei d ≤ bₘₐₛ gewählt ist.

Fig. 1 zeigt ein weiteres Ausführungsbeispiel, bei dem im Bereich der zweiten Knickstellen 7 in der Umfangsrippe 2 jeweils ein nutförmiger Einschnitt 16 und ein nutförmiger Einschnitt 17 ausgebildet sind, die jeweils in die Umfangsrippe 2 hinein reichende Verlängerungen der beiden in der zweiten Knickstelle 7 abgeknickten Erstreckungsabschnitte der Umfangsrille 3 bilden. Die nutförmigen Einschnitte 16 und 17 sind dabei mit einer in der Oberfläche 15 der Umfangsrippe 2 in Fortführung der Verjüngung der Breite b des Rillengrundes 9 der Umfangsrille 3 ausgebildeten mit einer mit zunehmendem Abstand von der Knickstelle 7 abnehmenden Breite ausgebildet und enden in axialer Richtung A im Abstand a von der Umfangsrille 4. Der Abstand a ist dabei mit (0,25c) ≤ a ≤ (0,5c) ausgebildet, wobei c den in der Oberfläche 15 ausgebildeten in axialer Richtung A gebildeten Abstand zwischen Umfangsrille 4 und Umfangsrille 3 in der Umfangsposition der zweiten Knickstelle 6 darstellt. Der Abstand c bildet somit die maximale axiale Erstreckung der Profilrippe 2 in der Oberfläche 15.

### Bezugszeichenliste

### (Teil der Beschreibung)

- 1: Profilblockreihe
- 2: Profilrippe
- 3: Umfangsrille
- 4: Umfangsrille
- 5: Querrille
- 6: Erste Knickstelle
- 7: Zweite Knickstelle
- 8: Profilblockelement
- 9: Rillengrund
- 10: Rillenwand
- 11: Rillenwand
- 12: Radial innerer Erstreckungsabschnitt
- 13: Radial äußerer Erstreckungsabschnitt
- 14: Radial äußere Oberfläche
- 15: Radial äußere Oberfläche
- 16: Nut
- 17: Nut

## Patentansprüche

1. Fahrzeugreifen mit einem - insbesondere asymmetrischen - Laufstreifenprofil mit einer an der zum Fahrzeug hinweisenden Reifeninnenschulter (IN) ausgebildeten Profilblockreihe (1) aus in Umfangsrichtung U des Fahrzeugreifens hintereinander angeordneten und durch Querrillen (5) von einander beabstandeten Profilblockelementen (8) und mit einer über den Umfang des Fahrzeugreifens erstreckten Profilrippe (2), welche von der Profilblockreihe (1) in axialer Richtung A des Fahrzeugreifens durch eine über den Umfang des Fahrzeugreifens erstreckte, zickzack-förmig verlaufende Umfangsrille (3) mit in Umfangsrichtung U alternierend angeordneten ersten (6) zur Profilblockreihe (1) axial hinweisenden und zweiten (7) von der Profilblockreihe (1) axial wegweisenden Knickstellen getrennt ist, wobei in jede erste Knickstelle (6) jeweils eine der Querrillen (5) mündet, wobei die Umfangsrille (3) nach radial innen von einem Rillengrund (9), zur Profilblockreihe (1) hin von einer ersten Rillenwand (11) und zur Profilrippe (2) von einer zweiten Rillenwand (10) begrenzt ist,
**dadurch gekennzeichnet,**
dass die erste Rillenwand (11) aus einem radial inneren Erstreckungsabschnitt (12), der sich in radialer Richtung R vom Rillengrund (9) nach außen bis in eine radiale Position in einer Höhe h vom tiefsten Punkt des Rillengrundes (9) erstreckt, und aus einem radial äußeren Erstreckungsabschnitt (13), der sich von der Höhe h ausgehend nach radial außen bis zu der die Profilblockreihe (1) nach radial außen begrenzenden, die Straßenkontaktfläche bildenden Oberfläche (14) erstreckt, ausgebildet ist, wobei im radial inneren Erstreckungsabschnitt (12) die Rillenwand (11) längs der Erstreckung von Knickstelle (6) zu Knickstelle (7) der Umfangsrille unter Einschluss eines konstanten Neigungswinkels γ zur Radialen R geneigt ist und die Höhe h längs der Erstreckung zwischen zwei hintereinander angeordneten Knickstellen (6,7) jeweils von erster (6) zu zweiter (7) Knickstelle hin kontinuierlich abnimmt, und wobei im radial äußeren Erstreckungsabschnitt (13) die Rillenwand (11) längs der Erstreckung von Knickstelle (6) zu Knickstelle (7) der Umfangsrille (3) unter Einschluss eines konstanten Neigungswinkels α zur Radialen R geneigt ist mit α > γ, und
dass die zweite Rillenwand (10) sich in radialer Richtung R vom Rillengrund (9) nach außen bis zu der die Profilrippe (2) nach radial außen begrenzenden, die Straßenkontaktfläche bildenden Oberfläche (15) erstreckt und längs der Erstreckung von Knickstelle (6) zu Knickstelle (7) der Umfangsrille (3) unter Einschluss eines Neigungswinkels β zur Radialen R geneigt ausgebildet ist, wobei der Neigungswinkels β längs der Erstreckung zwischen zwei hintereinander angeordneten Knickstellen (6,7) jeweils von erster (6) zu zweiter (7) Knickstelle hin kontinuierlich abnimmt.

2. Fahrzeugreifen gemäß den Merkmalen von Anspruch 1,
wobei der Neigungswinkels β mit 0° ≤ β ≤ 35° ausgebildet ist.

3. Fahrzeugreifen gemäß den Merkmalen von Anspruch 2,
wobei der Neigungswinkels β längs der Erstreckung zwischen zwei hintereinander angeordneten Knickstellen (6,7) jeweils von erster (6) zu zweiter (7) Knickstelle hin von einem maximalen Wert βₘₐₓ =35° bis zu einem minimalen Wert βₘᵢₙ=0° kontinuierlich abnimmt.

4. Fahrzeugreifen gemäß den Merkmalen von einem der vorangegangenen Ansprüche,
wobei der Neigungswinkels α mit 35° ≤ α ≤ 60° ausgebildet ist.

5. Fahrzeugreifen gemäß den Merkmalen von einem der vorangegangenen Ansprüche,
wobei die Höhe h längs der Erstreckung zwischen zwei hintereinander angeordneten Knickstellen (6,7) jeweils von erster (6) zu zweiter (7) Knickstelle hin von einem maximalen Wert hₘₐₓ = P_{T} bis zu einem minimalen Wert hₘᵢₙ = 0mm kontinuierlich abnimmt, wobei P_{T} die maximale Profiltiefe in der Umfangsrille (3) ist.

6. Fahrzeugreifen gemäß den Merkmalen von einem der vorangegangenen Ansprüche,
wobei die im Rillengrund (9) der Umfangsrille (3) jeweils senkrecht zum Rillenverlauf und zur radialen Richtung R gemessene Rillenbreite b längs der Erstreckung der Umfangsrille (3) zwischen zwei hintereinander angeordneten Knickstellen (6,7) jeweils von erster (6) zu zweiter (7) Knickstelle hin kontinuierlich abnimmt.

7. Fahrzeugreifen gemäß den Merkmalen von Anspruch 6,
wobei die Breite b mit 1mm ≤ b ≤ 10mm ausgebildet ist.

## Claims

1. Vehicle tyre with a tread profile - in particular an asymmetrical tread profile - with a row of profile blocks (1), formed on the inner tyre shoulder (IN) facing the vehicle and comprising profile block elements (8) arranged one behind the other in the circumferential direction U of the vehicle tyre and spaced apart from one another by transverse grooves (5), and with a profile rib (2), which is made to extend over the circumference of the vehicle tyre and is separated from the row of profile blocks (1) in the axial direction A of the vehicle tyre by a circumferential groove (3) that is made to extend over the circumference of the vehicle tyre, runs in the form of a zigzag and has, arranged alternating in the circumferential direction U, first points of inflection (6), axially towards the row of profile blocks (1), and second points of inflection (7), axially away from the row of profile blocks (1), one of the transverse grooves (5) respectively opening out at each first point of inflection (6), the circumferential groove (3) being bounded radially inwardly by a groove base (9), towards the row of profile blocks (1) by a first groove wall (11) and towards the profile rib (2) by a second groove wall (10),
**characterized in that** the first groove wall (11) is formed by a radially inner portion of extent (12), which extends in the radial direction R from the groove base (9) outwards up to a radial position at a height h from the lowest point of the groove base (9), and a radially outer portion of extent (13), which extends from the height h radially outwards up to the surface (14) bounding the row of profile blocks (1) radially outwardly and forming the road contact area, wherein, in the radially inner portion of extent (12), the groove wall (11) is inclined along the extent from point of inflection (6) to point of inflection (7) of the circumferential groove with the inclusion of a constant angle of inclination γ in relation to the radial R, and the height h decreases continuously along the extent between two points of inflection (6, 7) arranged one behind the other, in each case from the first point of inflection (6) to the second point of inflection (7), and wherein, in the radially outer portion of extent (13), the groove wall (11) is inclined along the extent from point of inflection (6) to point of inflection (7) of the circumferential groove (3) with the inclusion of a constant angle of inclination α in relation to the radial R, with α > γ, and
**in that** the second groove wall (10) is formed so as to extend in the radial direction R from the groove base (9) outwards up to the surface (15) bounding the profile rib (2) radially outwardly and forming the road contact area and so as to be inclined along the extent from point of inflection (6) to point of inflection (7) of the circumferential groove (3) with the inclusion of an angle of inclination β in relation to the radial R, the angle of inclination β decreasing continuously along the extent between two points of inflection (6, 7) arranged one behind the other, in each case from the first point of inflection (6) to the second point of inflection (7).

2. Vehicle tyre according to the features of Claim 1,
the angle of inclination β being formed with 0° ≤ β ≤ 35°.

3. Vehicle tyre according to the features of Claim 2,
the angle of inclination β decreasing continuously along the extent between two points of inflection (6, 7) arranged one behind the other, in each case from the first point of inflection (6) to the second point of inflection (7), from a maximum value βₘₐₓ = 35° to a minimum value βₘᵢₙ = 0°.

4. Vehicle tyre according to the features of one of the preceding claims,
the angle of inclination α being formed with 35° ≤ α ≤ 60°.

5. Vehicle tyre according to the features of one of the preceding claims,
the height h decreasing continuously along the extent between two points of inflection (6, 7) arranged one behind the other, in each case from the first point of inflection (6) to the second point of inflection (7), from a maximum value hₘₐₓ = P_{T} to a minimum value hₘᵢₙ = 0 mm, where P_{T} is the maximum profile depth in the circumferential groove (3).

6. Vehicle tyre according to the features of one of the preceding claims,
the groove width b, measured in the groove base (9) of the circumferential groove (3) perpendicularly to the path followed by the groove and perpendicularly to the radial direction R, decreasing continuously along the extent of the circumferential groove (3) between two points of inflection (6, 7) arranged one behind the other, in each case from the first point of inflection (6) to the second point of inflection (7).

7. Vehicle tyre according to the features of Claim 6,
the width b being formed with 1 mm ≤ b ≤ 10 mm.

## Revendications

1. Pneu de véhicule comprenant un profil de bande de roulement - notamment asymétrique - avec une rangée de blocs profilés (1) réalisée au niveau de l'épaule interne du pneu (IN) tournée vers le véhicule à partir d'éléments de blocs profilés (8) disposés les uns derrière les autres dans la direction périphérique U du pneu de véhicule et espacés les uns des autres par des gorges transversales (5) et avec une nervure profilée (2) s'étendant sur la périphérie du pneu de véhicule, laquelle est séparée de la rangée de blocs profilés (1) dans la direction axiale A du pneu de véhicule par une gorge périphérique (3) s'étendant sur la périphérie du pneu de véhicule, en forme de zigzag, avec des premières zones d'inflexion (6) tournées axialement vers la rangée de blocs profilés (1) et des deuxièmes zones d'inflexion (7) détournées axialement de la rangée de blocs profilés (1), disposées en alternance dans la direction périphérique U, à chaque fois l'une des gorges transversales (5) débouchant dans chaque première zone d'inflexion (6), la gorge périphérique (3) étant limitée radialement vers l'intérieur par un fond de gorge (9), vers la rangée de blocs profilés (1) par une première paroi de gorge (11), et vers la nervure profilée (2) par une deuxième paroi de gorge (10), **caractérisé en ce que**
la première paroi de gorge (11) est réalisée à partir d'une portion d'étendue radialement interne (12) qui s'étend dans la direction radiale R depuis le fond de gorge (9) vers l'extérieur jusque dans une position radiale à une hauteur h depuis le point le plus profond du fond de gorge (9), et d'une portion d'étendue radialement externe (13) qui s'étend à partir de la hauteur h radialement vers l'extérieur jusqu'à la surface (14) formant la surface de contact avec la route, limitant radialement vers l'extérieur la rangée de blocs profilés (1), la paroi de gorge (11), dans la portion d'étendue radialement interne (12), étant inclinée le long de l'étendue depuis la zone d'inflexion (6) jusqu'à la zone d'inflexion (7) de la gorge périphérique en formant un angle d'inclinaison constant γ par rapport à la radiale R et la hauteur h le long de l'étendue entre deux zones d'inflexion (6, 7) disposées l'une derrière l'autre diminuant en continu à chaque fois de la première zone d'inflexion (6) vers la deuxième zone d'inflexion (7), et la paroi de gorge (11), dans la portion d'étendue radialement externe (13), étant inclinée le long de l'étendue depuis la zone d'inflexion (6) jusqu'à la zone d'inflexion (7) de la gorge périphérique (3) en formant un angle d'inclinaison constant α par rapport à la radiale R, avec α > γ, et
**en ce que** la deuxième paroi de gorge (10) s'étend dans la direction radiale R depuis le fond de gorge (9) vers l'extérieur jusqu'à la surface (15) formant la surface de contact avec la route, limitant radialement vers l'extérieur la nervure profilée (2) et est réalisée sous forme inclinée le long de l'étendue depuis la zone d'inflexion (6) jusqu'à la zone d'inflexion (7) de la gorge périphérique (3) en formant un angle d'inclinaison β par rapport à la radiale R, l'angle d'inclinaison β diminuant en continu le long de l'étendue entre deux zones d'inflexion (6, 7) disposées l'une derrière l'autre, à chaque fois de la première zone d'inflexion (6) vers la deuxième zone d'inflexion (7).

2. Pneu de véhicule selon les caractéristiques de la revendication 1, dans lequel l'angle d'inclinaison β est réalisé avec 0° ≤ β ≤ 35°.

3. Pneu de véhicule selon les caractéristiques de la revendication 2, dans lequel l'angle d'inclinaison β le long de l'étendue entre deux zones d'inflexion (6, 7) disposées l'une derrière l'autre diminue en continu à chaque fois de la première zone d'inflexion (6) vers la deuxième zone d'inflexion (7) depuis une valeur maximale βₘₐₓ = 35° jusqu'à une valeur minimale βₘᵢₙ = 0°.

4. Pneu de véhicule selon les caractéristiques de l'une quelconque des revendications précédentes, dans lequel l'angle d'inclinaison α est réalisé avec 35° ≤ α ≤ 60°.

5. Pneu de véhicule selon les caractéristiques de l'une quelconque des revendications précédentes, dans lequel la hauteur h le long de l'étendue entre deux zones d'inflexion (6, 7) disposées l'une derrière l'autre diminue en continu à chaque fois de la première zone d'inflexion (6) vers la deuxième zone d'inflexion (7) depuis une valeur maximale hₘₐₓ = P_{T} jusqu'à une valeur minimale hₘᵢₙ = 0 mm, P_{T} étant la profondeur maximale de profilé dans la gorge périphérique (3).

6. Pneu de véhicule selon les caractéristiques de l'une quelconque des revendications précédentes, dans lequel la largeur de gorge b mesurée dans le fond de gorge (9) de la gorge périphérique (3) à chaque fois perpendiculairement à l'étendue de la gorge et à la direction radiale R le long de l'étendue de la gorge périphérique (3) entre deux zones d'inflexion (6, 7) disposées l'une derrière l'autre diminue en continu à chaque fois de la première zone d'inflexion (6) vers la deuxième zone d'inflexion (7).

7. Pneu de véhicule selon les caractéristiques de la revendication 6, dans lequel la largeur b est réalisée avec 1 mm ≤ b ≤ 10 mm.
